(19) Europäisches Patentamt
European Patent Office
Office européen des brevets

(11) **EP 4 167 155 A1**

(12) **EUROPEAN PATENT APPLICATION**

(43) Date of publication:
**19.04.2023 Bulletin 2023/16**

(21) Application number: **21202683.5**

(22) Date of filing: **14.10.2021**

(51) International Patent Classification (IPC):
**G06Q 10/06** (2023.01)          **G06Q 10/00** (2023.01)

(52) Cooperative Patent Classification (CPC):
**G06Q 10/06311; G06Q 10/063116;
G06Q 10/06312; G06Q 10/06393; G06Q 10/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi, Ltd.
Tokyo 100-8280 (JP)**

(72) Inventors:
• **RODRIGUEZ-VERA, Cristina
06560 Valbonne (FR)**

• **LIN, Lan
06560 Valbonne (FR)**

(74) Representative: **Mewburn Ellis LLP
Aurora Building
Counterslip
Bristol BS1 6BX (GB)**

Remarks:
Amended claims in accordance with Rule 137(2)
EPC.

(54) **PLANNING OPTIMISATION FOR HUMAN-MACHINE INTERACTIVE TASKS CONSIDERING MACHINE EMISSION GOAL AND HUMAN COMPETENCE GROWTH**

(57)     This invention refers to a method for maintaining machinery, comprising the steps of: a) determining, by a computer, when the machinery will need to be maintained, b) acquiring, by a computer, tasks to be executed by workers, c) generating, by a computer, a list of tasks for at least one of the workers, the list is generated including a task for maintaining the machinery as determined in step a) and including the tasks acquired in step b), d) maintaining the machinery based on the list of tasks for the one of the workers, wherein steps a) to c) are executed independently from each other.

FIG. 11

Task information (per task):
Skills, expertise, priority,
duration, location, material,
remote possibility

No

Maintenance
emissions information:
Material, travels, tasks

Assign tasks

**Sequencing model**
17

Tasks and/or training to perform by each

Ordered sequence of tasks and trainings.
Groups of workers for multi-skill tasks.
Remote/on-site groups of workers

**Dynamic model**
16

Add tasks to tasks log.
Modify tasks priority

Full schedule of workers not considering
medium and low priority

High priority tasks
generated during the day

Yes

Where tasks
medium/low priority
dispaced ?

Assign high priority tasks

Updated schedule

FIG. 11 (Continued)

**Description**

The invention refers to a method for maintaining machinery, comprising the steps of: determining, by a computer, when the machinery will need to be maintained, and acquiring, by a computer, tasks to be executed by workers.

The invention further relates to a system for maintaining machinery, comprising an input port for acquiring data from the machinery, a task port configured to receive tasks to be executed by workers, and a configuration portion configured to determine when the machinery will need to be maintained.

In current work environments, planning and scheduling involves various organizational levels and, thus, various parameters need to be considered. Decision making processes often involves trade-off between such variables. For example, a plant manager is in charge of making investment decision on company assets. They need to balance the trade-off by considering variables such as operation cost (e.g. maintenance cost, energy consumption cost, human resource cost), machine status/performance, machine life cycle ($CO_2$ emission of asset life cycle), available investment budget. At the shop floor level, the work team leader is in charge of creating tasks planning with available work resources, they need to make trade-off decisions with variables such as worker skill, worker's training needs, delay requirements, cost elements, etc. At the worker level, each individual worker is assigned with tasks which fit to his/her skills and competence, meanwhile, the worker may also be willing to increase the competence learning opportunities, either by receiving dedicated training, or by being accompanied by experienced workers with target expertise.

In addition, the Triple bottom line (TBL) (or triple P i.e. People, Planet, Profit), in economics, believes that companies should commit to focusing as much on social and environmental concerns as they do on profits. Companies should consider various type of KPIs (Key Performance Indicators) such as cost reduction, emission reduction, human resource improvement during decision making process. Such multi-objective decision making increase further the complexity. Also, the KPIs have different importance for different companies, thus, they have to allow for different weighting.

Most of optimization solution in the field focuses on cost or profit optimization or delay optimization as exemplified by US 4,888,692 and EP 1 947 598 A2. US 2010/233663 A1 describes organization of the workforce competency roadmap while JP 2014 016691 A considers the idea of the degradation of water plant management system to account for their performance over its life cycle.

An objective of the invention is to provide a method and system for maintenance planning optimisation of machinery which optionally includes sustainability-oriented and human-centric objectives.

This objective is solved by the subject matter of the independent claims. The dependent claims describe preferred embodiments of the invention.

At its most general, the invention refers to a method and/or a system for maintaining a machinery which can take into account-human centric objectives and/or systemoriented objectives. This means that a decision whether or not to maintain the machinery is not only based on the technical need to maintain the machinery but also includes "soft" factors such as the environmental impact of delaying or forward a maintenance of the machinery, and worker's needs for example with regards to their schedule, training on the maintained machinery, and/or travelling routes.

In other words, the invention solves an optimization problem which can include one or more of the following aspects:

- Planning optimisation: ordered sequence of tasks to be executed by each worker at different frequencies (yearly, monthly, weekly, or daily)
- Work-balance optimisation: balanced distribution of work between the workers.
- Team optimisation: best group of workers to execute multi-skill tasks.
- Training optimisation: allocation of training to workers in the best time fitting their maintenance obligations.
- Remote worker optimisation: when there are remote tasks, the model also optimises the schedule of remote workers and provides the best days for remote working.
- Machine repair and upgrade time optimisation: recommendation of best timing for repair a machine component or upgrading a machine, considering capacity, cost, maintenance needs and life-cycle emissions.

As mentioned previously, in addition to the conventional objectives of cost and delay reduction, the optimisation can include sustainability-oriented and human-centric objectives:

- The sustainability-oriented aspects can relate to the reduction of $CO_2$ equivalent emissions coming from different sources such as worker travels, material, maintenance-related machinery consumption, and machine upgrade or repair recommendation.
- The human-centric aspect may relate to the workers' preferences for both the allocation of tasks and training, and/or to the workload of the worker to assign the most balanced schedule possible.

In general, the invention can include building blocks to account for the following types of possible user configuration:

- Weighted objectives to configure the invention according to the user's needs, which allow choosing the objectives that align with the strategy. The weights range from 0 to 1, that is, from the complete omission of the objective to the fully weight.
- Multi-model division for using the invention at different time frequency depending on the data availability: from a more static version of the shopfloor (yearly, monthly, weekly) to considering real-time or semi-real-time information for a more dynamic version of the shopfloor (daily, hourly).

Given that an increasing number of parameters and operational constraints are expected to be considered, in order to cope with continuous changing and complex business and work environment, the computational complexity of a digital optimization problems also increases. Engineers and researchers often need to make compromise between computational time and simplification of mathematical formulation in order to reach a converged result within acceptable timeframe. Such process often requires multiple manual changes of model parameter tuning and setting along the development phase, thus resource and time consuming. The presented invention addresses this problem by decomposing a complex problem into sub optimization models interacting with each other, as well as a technique which automatically evaluates the computational complexity and adjusted the parameter settings accordingly, in order to limit the computation time within a target duration.

An aspect of optimisation need is the planning optimisation for individual workers and for teams of workers. This may also include the identification of the optimal number of workers and skills in a maintenance worker department.

The invention has overcome two main difficulties:

- Solve complex problems in a reduced amount of time, in order to allow for reaction to unplanned events. Fast convergency often is a requirement for operational implementations. This issue is addressed with a multi-layer model interaction. The invention may also refer to a parameter adjusting function which allows the determination of an optimum data aggregation level and time span for the execution of the different models.
- Adaption to the different strategic goals: the invention can be aligned with a company's strategic goals and change along with the goals. This issue can be addressed with the multi-objected and/or multi-weighted implementation.

In addition, the invention can address the increasing efforts in industries for including sustainable actions and improve the workers' satisfaction in the workplace. Therefore, human-centric and sustainable goals can be included as an option in the multi-objective selection.

This invention combines the aforementioned needs for the case of maintenance activities optimisation. For example, the invention relates to a method for maintaining machinery and/or planning a list of tasks for a worker, comprising the steps of:

a) determining, by a computer, when the machinery will need to be maintained,
b) acquiring, by a computer, tasks to be executed by workers,
c) generating, by a computer, a list of tasks for one of the workers, the list is generated including a task for maintaining the machinery as determined in step a) and including the tasks acquired in step b),
wherein steps a) to c) are executed independently from each other.

The method may also include a step d) of maintaining the machinery based on the list of tasks for the one of the workers. Step d) may include recording the execution of the maintenance on the machinery and/or the machine to which steps a) to c) relate.

The invention may also relate to a system for maintaining machinery and/or planning a list of tasks for a worker, comprising an input port for acquiring data from the machinery, a task port configured to receive tasks to be executed by workers, a configuration portion configured to determine when the machinery will need to be maintained, a task portion configured to generate a list of tasks for one of the workers, wherein the list is generated including a task for maintaining the machinery as determined by the configuration portion and including the tasks acquired by the task port, and an output portion configured to output the task to maintain the machinery and/or the list of tasks for one of the workers to the one of the workers, wherein the configuration portion and the task portion are configured to operate independently from each other.

One or more steps of the method may be executed by a computer which may include a processor and a memory. The processor may execute one or more algorithms that are stored in the memory. The executed algorithms may be an implementation of one or more steps of the method described above.

The system described above may be a part of or is implemented by a computer. The features of the system may relate to parts of the computer. In addition, features of the system may relate to functional units that are executed by the computer.

The computer may include a personal computer, a server, and/or a remote cloud computer which are connected to or coupled to the machinery in order to receive data from the machinery. The data generated by the machinery may characterise the working of the machinery. In particular, the data generated by the machinery can be call machine data which allows a technical characterization of the machinery. For example, operational instructions input into the machinery can be data that (technically) characterises the machinery. In addition, the machinery may include one or more sensors that monitor the (technical) operation of the machinery. The output of the sensors is data that can be analysed by the method and/or system described above. The data generated by the machinery may be in a computer readable format. If not, the system and/or the method include means for transforming the data generated by the machinery into a computer readable format.

The machinery may include one or more machines which can be of the same type or of different types. Further, the one or more machines can be located in a single workshop or in various workshops. The workshops may be located at the same site (such a production plant or a factory) or different sites of a company using the machinery. It is solely important that data characterising the machinery is forwarded to the system. For example, each machine of the machinery is at least indirectly connected to the system described above. The connection may be implemented by a data pipeline such as a LAN, wireless network, and/or an internet connection. For example, the machinery includes all or a sub-group of machines used for the manufacture of a car.

The machine and/or machinery may be used to manufacture and/or treat one or more products such as a car or parts of a car. The machines may execute the same task or different tasks of a workflow for the manufacturing and/or treatment of the product. The maintenance of machinery may include repairing, maintaining, upgrading, and/or replacing one or more of the machines of the machinery. The maintenance of the machinery may also include adding new machines to the machinery. Thus, determination whether or not a machine of the machinery needs to be maintained may relate to the hours the machine has operated so far, to existing or expected issues with the functioning of the machine, to the current or expected workload of the machine (such that a new machine may be necessary), and/or environmental aspects that indicate that the machine needs to be replaced/upgraded although it is fully functioning (but a replacement or upgrade improves the environmental impact of the machine). The system and/or method may also assess whether the costs for maintaining the machinery are within a given budget. If the costs for maintaining the machinery is over budget, a task for maintaining a machinery may be postponed, for example, if it is a non-urgent task aiming at reducing the emissions.

The system and/or method may be configured to calculate/compute the costs (e.g. operation costs, costs for expected maintenance, consumption costs such as for electricity, fuel, lubricants, material input, and/or waste, costs for the replacement and addition of a machine) and/or emissions of continued operation of the machinery. The system and/or method may also be configured to calculate/compute the costs and/or emissions for a changed machinery included a new, upgraded, and/or replaced machine(s). The system and/or method may compare the costs and/or emissions in order to decide whether or not to replace, upgrade and/or add a machine to the machinery.

The determination whether or not a machine of the machinery needs to be maintained can made based on the data generated by the machinery. To this end, commonly known algorithms and/or methods described further below may be used. Thus, the determination whether or not to maintain a machine of the machinery is a technical consideration based on technical parameters, i.e. the data generated by the machinery. The maintenance of a particular machine may be indicated by the machine itself but also in view of the other machines of the machinery. For example, the workload and/or functioning of the other machines of the machinery may require that a machine needs to be upgraded or it is a convenient time to maintain this machine as it is not needed in the workflow.

The system may include an input port that can be connected to the data pipeline in order to acquire data from the machinery. The input port may be an interface of a computer that allows connection of the computer to a LAN and/or wireless network.

The input port may additionally be configured to receive other types of data which may relate economical and/or environmental information on the machinery such as costs and/or generated by the current machinery, by a new, upgraded and/or replaced machine. These other types of data may be used to determine whether one or more machines need to be replaced, upgraded, and/or added from a business and/or environmental view, i.e. not based on the technical data generated by the machinery itself.

The task port can include a user interface that allows a user such as a worker to input tasks to be executed by workers. For example, the task port may include a screen, touch screen, a keyboard, and/or mouse that allows a user to type in, select, and/or otherwise choose a task to be executed by a worker or group of workers. In addition, the task port may be a computer interface that allows the connection of the computer to a network, such as LAN or wireless network. This allows that the task can be remotely input and/or that the task is automatically generated for example by the machinery if an error occurs. The task port is an example for executing step b) of the method described above.

The task port may also allow the input of meta-data to the tasks. Such meta-data may relate to the skills/expertise required to execute the task, the location where the task needs to be executed, the duration of the task, the priority of the task, material needs to execute task, and the like. In addition, the task port may allow the input of information on workers, such as availability, task preferences, training ambitions, skills, expertise, location, and/or the like. These pieces of information may be considered in generating a list of tasks for each worker.

The output portion can include any means to output the task to maintain the machinery and/or a list of tasks to a worker. For example, the output portion includes a screen for displaying the task(s) and/or a printer for printing the task(s). It is also possible that the output portion includes means for forwarding and/or transmitting the task(s) to other computers and/or mobile devices. In this case, the output portion may include a transmitter and/or an interface allowing connection to a network.

The list(s) of tasks may be periodically (hourly, daily, or weekly) output. The worker or group of workers receiving the list of tasks may execute the tasks in the order outlined in a list of tasks. If one of the tasks includes maintaining a machine or a plurality of machines of the machinery, the worker maintains the machines indicated in the list of tasks.

The configuration portion may execute or use a configuration model (also called shop floor configuration model). This means that the determination when the machinery needs to be maintained can be made based on the configuration model which is a model that processes the data generated by the machinery in order to determine whether or not a machine needs to be maintained. The configuration model may also consider the business and/or environmental aspects discussed above.

The configuration model may be a deterministic or probabilistic model that puts the various types of data generated by the machinery in relation to each other and/or predicts the maintenance of the machinery in view of the data generated by the machinery. Details of the configuration model which is an example of step a) of the method described above will be discussed in the following.

Alternatively or additionally, the configuration portion may include artificial intelligence such as a neural network that predicts the maintenance of the machinery based on stored machine data. This means, the artificial intelligence does not require a model or algorithm that is input by a programmer of the configuration portion, but previous data and the functioning of the machinery are input, and the neural network predict the maintenance of the machine solely based on the history of the operation of the machinery.

The configuration model may also process data relation to the consumption of a machine such as electricity, fuel, lubricants and/or material. For example, deviations from an average consumption may indicate a need for maintaining the machine. Information on the consumption may be acquired directly from the machinery or can be manually input (for example using the input port).

The configuration model may also include and/or refer to periodic or predetermined maintenance tasks. For example, deviations from the usual maintenance pattern may indicate that the machine may require a general overhaul or replacement. It is also possible that, besides changes in the frequency of maintenance tasks for a machine, increased complexity of the maintenance task indicates a general overhaul or replacement. Information on the usual maintenance pattern may be acquired directly from the machinery or can be manually input (for example using the input port).

The configuration model may also refer to the capacity of the machine which may include the current capacity (e.g. for manufacturing products, battery life or the like), changes in the capacity, and/or changes in the machine availability. Changes in the capacity may indicate an upgrade of the machine or the purchase of a new machine (to increase the capacity of the machinery). Information on the capacity of the machinery may be acquired directly from the machinery or can be manually input (for example using the input port).

The configuration model can also refer to costs of operating the machine such as energy and/or material required for the operation of the machine and/or for producing the product. Increased costs compared to a new or upgraded machine may indicate upgrade of the machine or the purchase of a new machine. This may be the case if the costs due to delays on missing demand opportunities are greater than the cost of a new machine.

Furthermore, the configuration model may also refer to environmental impacts of the continuation of using the current machine, replacing the machine, and/or the improved performance of the new machine. Of course, the configuration model may also refer to the financial costs associated with maintaining, repairing, upgrading, and/or replacing a machine. These various aspects may be weighed against each other in order to determine whether or not a machine needs to be maintained. As discussed in further detail below, the configuration model allows to change the weighting settings of the various aspects considered in the configuration model.

The task portion may be an example which executes step c) of the method described above. The task portion may include a task planning model. The tasks planned by the task portion may include a training or training sessions of one or more workers. If so, the task portion includes a task and training planning model. The task planning model and the task and training planning model allocate the acquired tasks to each of the workers such that each worker receives a list of tasks. The tasks allocated to the workers can include the maintenance of a machine if such maintenance is necessary.

The allocation of the tasks is an optimization problem in view of the meta-data outlined above which can include the priority of the tasks, task duration, task location (e.g. regarding travelling time between machines), the required skills for the task, worker's preferences (e.g. remote working, type of task). The allocation of the task may also refer to environmental impact of the execution of the tasks such emissions for travelling, energy required for postponing tasks, and the like.

The task planning model and the task and training planning model may be a deterministic or probabilistic model that puts the various types of meta-data described above in relation to each other and/or generates an optimised lists of tasks for each working which implements the best schedule of tasks with regards to minimum delay, minimum planning costs, satisfaction of workers preferences, travelling costs, travelling distances, and/or match of required skills in relation to the skills of each worker. Known minimisation or optimization models/algorithms may be used for the task and training planning model or the task and training planning model.

Alternatively or additionally, the task planning model or the task and training planning model may include artificial intelligence such as a neural network that prepares the list of tasks based on stored training data. This means, the artificial intelligence does not require a model or algorithm that is input by a programmer of the configuration portion but is solely based on previous tasks and their corresponding list of tasks for each worker.

Execution of steps a) to c) as well as the operation of the configuration portion, task portion and/or the task port may be done separate or independent from each other. This means that the corresponding processes are run on different time scales and/or are executed independently from each other (such that the execution of one model does not require the simultaneous execution of the other model). However, it is apparent that results from one of the steps or portions are input into another step or portion. For example, a task for maintaining a machinery (generated by the configuration portion) is input into the task portion which allocates the maintenance task to the workers in view of the other tasks. Conversely, the completion of a training of one or more workers may be input into the configuration model indicating that the skills of the workers allow the upgrade of a machine or the purchase of a new machine. In short, the different models, steps, and/or parts of the system may run independent from each other however, they connected with each other.

The invention solves the maintenance planning optimisation problem while considering simultaneously multiple optimisation objectives, some of them configurable, that is, that can be independently activated, deactivated, and partially weighted. The configuration flexibility allows the alignment of the invention with the user's strategy. The invention may include as configurable optimisation objectives the reduction of the emissions in the factory (machinery, maintenance travels, materials, etc.), the increase in maintenance task preference matching, the increase in maintenance training assignation as part of the day-to-day planning, and the optimised allocation of the tasks that could be executed remotely to increase the number of workers working remotely.

In an optional embodiment, step a) includes

a1) selecting objectives on which the determination when the machinery will need to be maintained are based, and/or

a2) weighting objectives on which the determination when the machinery will need to be maintained are based.

The objectives can refer to aspects, parameters, and/or variables that are taken in account in the configuration model. The objectives may also refer to potential outcomes that the configuration model can consider. For example, a potential outcome is whether the configuration model can consider the replacement of a machine or not. This means, a user can select whether step a) solely considers the repair of the machine or other aspects of the maintenance of the machine as described above.

Step a1) refers to the selection of one or more objectives while step a2) allows the weighting of the selected objectives, i.e. how much importance or priority is associated with a particular objective. This allows that certain objectives are treated more preferably compared to other objectives. Both the selection and the weighting of the objectives allow customisation of the configuration model to the needs of the user. Steps a1) and/or step a) may be executed by the configuration portion.

Potential objectives for step a) are listed in the following:

- Machine evaluation corresponds to a set of constraints for deciding on replacing or repairing a machine.
- Machine emissions corresponds to a set of constraints for defining the machine emission model to be used in the machine evaluation.
- Machine capacity corresponds to a set of constraints for defining the machine production capacity to be used in the machine evaluation.
- Machine cost corresponds to a set of constraints for calculating the machine operation and maintenance cost (including cost of missing production opportunities) to be used in the machine evaluation.

In an optional embodiment, step c) includes

c1) selecting objectives on which the generation of tasks for the one of the workers are based, and/or

c2) weighting objectives on which the generation of tasks for the one of the workers are based.

The objectives can refer aspects, parameters, and/or variables that are taken in account in the task planning model or the task and training planning model. The objective may also refer to potential outcomes that the task planning model or the task and training planning model can consider. In an embodiment of the invention, it is also possible to activate/deactivate step c) such as the execution of the task planning model or the task and training planning model. In this case, the method and/or system solely implement the determination whether or not a machine should be maintained. This highlights the variability of the present invention and the fact that steps a) to c) can be executed independent from each other.

Step c1) refers to the selection of one or more objectives while step c2) allows the weighting of the selected objectives, i.e. how much importance or priority is associated with a particular objective. This allows that certain objectives are treated more preferably compared to other objectives. Both the selection and the weighting of the objectives allow customisation of the task planning model or the task and training planning model to the needs of the user. Step c1) and/or step c2) may be executed by the task portion.

Potential objectives for step c) are listed in the following:

- Skill matching corresponds to a set of constraints for assigning workers with the correct set of skills to each maintenance task.
- Availability condition corresponds to a set of constraints for tasks (and training) during the maintenance worker available schedule, considering the production limitations.
- Remote/on-site condition corresponds to a set of constraints for prioritizing remote worker assignation and remote/on-site collaboration to tasks that can be executed remotely.
- Localization condition corresponds to a set of constraints for grouping tasks within locations and arranging the multi-location conditions (travelling from locations, groups of workers for tasks within location; etc.).
- Training assignation corresponds to a set of constraints for assigning training to workers during their available free time (while not performing their maintenance tasks). The training tasks for each worker and, more generally, the tasks for the workers can be selected and/or chosen by a manager of the worker and/or by the worker itself.
- Task prioritization corresponds to a set of constraints for prioritizing the execution of critical tasks.
- Preference matching.

In an optional embodiment, the system further comprises an interface portion configured to display and/or allow selection of objectives on basis of which the configuration portion and/or the task portion work, wherein optionally the interface portion allows weighting the objectives.

The objectives that can be selected and/or weighted can be prestored in the configuration portion and/or displayed by the interface portion. The configuration portion may be electrically or electronically connected to the interface portion providing data transfer between the respective portions. The interface portion may include a screen for displaying optional objectives and/or an input device such as keyboard or mouse. The interface portion may comprise a touch screen. The interface portion can also be remote of the computer implementing the configuration portion and/or the task portion. If so, the interface portion can include a mobile device and is connected to the computer, for example via an internet connection.

The weighting of the objectives may be done by inputting a numerical value (e.g. between 0 and 1), by moving a (virtual) slider, and/or by turning a (virtual) dial.

In an optional embodiment, step a) and/or step c) include the execution of a plurality of sub-models and a top-model, wherein optionally each sub-model processes a different objective, and wherein further optionally the top-model combines the results of the plurality of sub-models.

The sub-models and/or the top-model may be deterministic or probabilistic models as described above. Alternatively or additionally, the sub-models and/or the top-model are implemented by an artificial intelligence such as a neural network (as described above).

Each sub-model may refer to a single objective that processes the data input via the input port and/or the tasks (optionally including the meta-data) input via the task port. Alternatively, a particular sub-model refers to a plurality of objectives. For example, a particular sub-model analyses the data or parts of the data generated by the machinery in order to calculate/compute/predict the outcome of the chosen objective. For example, a sub-model analyses the data from the machinery in order to predict the emissions of a machinery or particular machine. With regards to step c), a sub-model may provide a preliminary list of tasks for a particular worker in view of a particular objective such as the workers' preferences.

The top-model may combine the results of the sub models in order to determine whether or not the machinery needs to be maintained (with regard to step a)) and/or to generate the final lists of tasks each worker (step c)). In particular, the top-model compares the different results generated by the sub-models and outputs a final result. Thereby, the top-model may weight the individual results of the sub-models. This means that the weighting of the objectives may be implemented by the top-model. The selection of the objectives may be implemented in that the corresponding sub-model is executed or not. The division of steps a) and c) into sub-models and a top-model can provide the modularity of the invention.

The top-model is configured to use the information (such as the objectives) as selected using the interface portion. In this embodiment, objectives that are selected using the interface portion corresponds to a selection which sub-models have to be executed. Terms of the objective(s) of each model and/or additional constraints in order to accommodate the models to the desired objectives can be input at the interface portion. Each selected objective can activate one or more objective terms (e.g. the reduction of emissions objective will activate objective terms "machine evaluation" and/or "machine emission"). Each objective term may require additional constraints, applicable to one or more sub-models and/or the top-model (e.g., objective term type "machine emission" activates additional constraints to be considered by the configuration portion and/or the task and planning portion), but the correct integration of each constraint within the model(s) that it affects is handled by the system (this may be called user abstraction).

In an optional embodiment, the method further comprises step e) which includes sequencing or ordering the tasks assigned to the one of the workers (optionally based on an assigned priority of the tasks), wherein step e) is executed independently from steps a) to c).

Step e) may be executed by the task portion. To this end, the task portion includes a task (and training) portion (implementing the task training planning or the task and training planning) and/or a sequencing portion which operates independent from the task (and training) portion. This means, that the sequencing portion can run on a different time scale and independent from the operation of the task and training planning portion. The task (and training) portion and/or the sequencing portion may be functional units of the computer described above. Thus, it is possible that step e) is executed independently from steps a) to c). The above comments regarding the independent operation of the different steps equally apply.

The sequencing of the tasks may include ordering the task in the order of more important tasks (having a higher priority) to less important tasks (having a lower priority). The priority may be manually assigned when generating the task. Alternatively or additionally, the priority is automatically assigned when generating the task and/or automatically changed based on pre-stored functions. For example, the non-operation of a machine due to malfunctioning automatically generates a task having a high priority. It is also possible that a task is assigned with a particular due date where in the priority is automatically increased the more the due date approaches. Other ways of sequencing the tasks are also possible, for example by due date, by closeness of location, and the like.

In an optional embodiment, the method further comprises selecting a frequency of execution of steps a) and c).

In an optional embodiment, the interface portion allows selecting a frequency of operation of the configuration portion and/or the task portion.

In this optional embodiment, the user can select/choose on which time scales the list of tasks and/or determination whether or not the machinery should be maintained are made. For example, the list of tasks for a particular worker is daily made such as at the beginning of a working day. The determination of the maintenance of the machinery may not require a daily update. Thus, step a) or the configuration portion run on a larger time scale.

The selection of frequency of execution of steps a) and c) can be manually made, for example based on the requirements, needs and/or experience of the user. As will be described in detail further below, in an optional embodiment, the invention provides recommendations for the respective time scales.

In an optional embodiment, the task includes a training task for the workers, wherein optionally step a) includes generating a training task for the maintained machinery that is included in step b).

The training task may refer to a training for a new, replaced, and/or upgraded machine. The training task may be generated upon installation of new, replaced, and/or upgraded machine and/or when a decision is made that a machine is newly installed or upgraded. In particular, a training task is generated before a new machine is installed such that workers working with the machine have the appropriate training to operate the machine. Thus, the completion of the training task can be a prerequisite for the scheduling of a maintenance task. The training task can also be assigned as a decision of the manager for balancing the skillset of the workers. This means that the training task can be set independent from the maintenance of the machinery.

The training task can be gathered and stored in the list of tasks that are required in step b), for example using the task port. The task port can also be configured to receive tasks (such as training tasks) which are input by a manager of the workers and/or by the workers themselves.

In an optional embodiment, the method further comprises the step of determining an optimum execution time span for executing steps a) and/or c). This step may include measuring/calculating the computational complexity depending on the input (such as (machine) data, objectives, and/or tasks), comparing time for execution of the method (execution time span) with the allowed execution time, and suggesting of the trade-off between data aggregation and execution time span. The execution time span depends on the computational complexity.

In an optional embodiment, the machinery generates a plurality of data types, wherein optionally step a) further includes determining an aggregation level for the plurality of data types and a minimum time frequency for executing step a).

In an optional embodiment, the system further comprises a data analysis portion connected to the input port and configured to determine an aggregation level for the data and a minimum time frequency of operation of the configuration portion.

The data analysis portion may be a functional unit of the computer described above. The data analysis portion may be part of the configuration portion which however can operate independent from the other portions of the configuration portion. Alternatively, the data analysis portion may be separate to the configuration portion and can be separate to the computer implementing in the configuration portion.

The data analysis portion may be connected to the data pipeline to receive the data generated by the machinery. The data analysis portion processes the received data and output a recommendation with regards to the aggregation level of the data and the minimum frequency for executing step a) and/or step c). The minimum frequency can be considered identical to the optimum execution time span.

The data analysis portion may output the aggregated data or the original data to the input port. The data analysis portion may therefore be connected or coupled to the input port in such a way that data can be forwarded from the data analysis portion to the input port.

The aggregation level of the data refers to the time scale of the data. For example, an aggregation level of a week includes all data that is generated during a week. Similarly, hourly or monthly aggregation are also possible. The aggregation level defines the coarseness of the data that are analysed by the system. The aggregation of data may include accumulating data during the aggregation time scale. To this end, the data can be averaged or otherwise processed to provide one particular data point that is representative of the data in the time range/period of the aggregation level. This allows to reduce the number of data points that are analysed in the configuration model (or step a)).

The minimum frequency for executing step a) as well as the aggregation level can be recommendations to the user. However, the system and the method work with data and frequencies that differ from the minimum frequency and the aggregation level. Following the recommendation of the minimum frequency may include in putting the recommended frequency as the frequency for executing step a) as described above. It is also possible that the system automatically implements the minimum frequency as the frequency for executing step a).

A higher level of aggregation (e.g. a week compared to a day) increases to speed of executing step a) but reduces the accuracy of the result of step a). In contrast thereto, a lower level of aggregation increases the accuracy of the prediction form for maintaining the machinery but reduces to speed of this prediction process. Thus, it is desired to achieve an optimal trade-off between these contradicting objectives.

In an optional embodiment, the determination of the aggregation level includes determining a standard deviation of each data type for different aggregation levels, calculating a contribution of each data type for the determination that the machinery will need to be maintained, calculating an accuracy penalty for each data type and each aggregation level, and comparing the calculated accuracy penalties against a threshold value in order to determine the aggregation level.

The standard deviation refers to the mathematical standard deviation which indicates the distribution of the data points within a particular time frame. A low standard deviation indicates that the data does not change rapidly while a high standard deviation indicates there is a significant amount of variation within the data. The standard deviation is calculated for each aggregation level which means that the standard deviation is for example calculated for data that is generated within hour, within a day, within a week, and/or within a month. Optionally, the standard deviation is calculated for each data type and for each aggregation level.

The calculation of the contribution of each data type for the determination that the machinery will need to be maintained can be done using models that are stored in the data analysis portion. Similarly as discussed above, the models may refer to a deterministic or probabilistic model on the one hand and/or to artificial intelligence (neural networks) on the other hand. In particular, it is possible that, in the very first use of the model, the values are initialised to default and equal values while, in the next runs of the model, the previous values are used.

An example of a deterministic model for calculating the contribution of each data type to the objective function is

$$contribution\ to\ objective_d = \sum_{objectives\ o} value\ magnitude_{o,d} \cdot weight\ of\ objective_{o,d}$$

The weight of the objective can be the weight that is assigned by the user or can be a predetermined or fixed weight. $d$ is the data type.

The accuracy penalty can be calculated based on the following formula:

$$Accuracy\ penalty\ (data\ d, time\ t)$$

$$= std_{d,t} \cdot contribution\ to\ objective_d$$

$$+ \sum_{d!=di} corr\ (d, di) \cdot std_{d,t} \cdot contribution\ to\ objective_{di}$$

wherein *std* is the standard deviation, *corr* is the correlation function, and the contribution to the objective$_d$ is the function shown above.

The thresholds to which the calculated accuracy penalties are compared can be prestored. If the accuracy penalty is below the threshold, the parameter is static in this aggregation level such that the parameter can be calculated in the next aggregation level. Thus, as a next step, the previous step is repeated in the next aggregation level until the condition is no longer fulfilled. If so (the accuracy penalty is greater than the threshold), this aggregation level corresponds to the suitable aggregation level. In short, the comparison of the calculated currency penalty against the threshold can be an iterative process which ends at that aggregation level at which the accuracy penalty is above threshold.

In an optional embodiment, the determination of the minimum time frequency includes estimating a time period for executing step a) at the determined aggregation level based on stored simulations, comparing the estimated time period with an inverse of the minimum time frequency, and accepting the estimated time period as the inverse of the minimum frequency if the estimated time period is greater than the inverse of the minimum time frequency.

The inverse of the minimum frequency corresponds to the maximum or optimal time span or time at which the determination whether to maintain a machinery is evaluated based on the chosen aggregation level.

To this end, all data types are aggregated at the aggregation level as determined above. Then, a time period is estimated for executing step a) at the determined aggregation level using all types of data. This is done using models or simulations which are pre-stored in the data analysis portion. The models and/or simulations may include regression analysis. Alternatively or additionally, the time period for executing step a) may be extrapolated based on previous behaviour and/or on the time period on other aggregation levels.

The estimated time period is compared to a target execution time which can be a prestored value. The estimated time period is accepted if it is greater than the target execution time. If so, the inverse of the estimated time period corresponds to the minimum time frequency.

In summary, the rationale for the data analysis is to control the computational complexity for practical applications. The computational complexity can depend on the number of decisions variables, the number of constraints, and/or the number of input parameters. The first two ones depend on the model definition, and thus, of the application for which the method and/or system is going to be used for. On the other hand, the number of input parameters depend on the aggregation level (that means, whether the results are provided for daily, weekly, monthly or yearly periods). Each application has a corresponding maximum duration that a user would be willing to wait in order to implement the results, and the objective of the data analysis is to find the lowest aggregation level that satisfies that maximum duration constraint, and suggest the maximum time period to evaluate using that aggregation level.

For example, if the user wants to evaluate some strategic goals, the method and/or the system might have a practical maximum time of 24h to run because it does not need fast results. The method/or system monitors the data required for this strategic evaluation and monitors the data variation and contribution to the model using the accuracy penalty concept. Under this example, there are several situations depending on the data:

- Data has a big variation: The function might suggest running partial results every week (more accurate but less fast) in order to avoid sacrificing accuracy of the data. Then, to compensate for that extra computational resources of providing weekly details of the results; the function might suggest evaluating a maximum total period of 3 months. Thus, the suggestion would be total evaluation frequency 3 months, aggregation level one week.
- Data has a small variation: If the data is rather static, the function might suggest running partial results every month because it does not imply a significant lost in accuracy and it is faster to execute. In that case, the function might suggest evaluating a maximum total period of 1 year, because the results would be given withing the maximum model time duration constraint. That is, the suggestion would be: total evaluation frequency 1 year, aggregation level one month.

In an optional embodiment, step b) includes periodically checking for new tasks, wherein optionally a task in the list of tasks for the one of the workers that has a low priority is replaced by a new task having a high priority and the replaced task is included in step b).

The periodical check for new tasks may be executed by a dynamic portion which can be a part of the task portion that runs independent of the task (and training) portion and the sequencing portion. The dynamic portion may be a functional unit of the computer implementing the system. The dynamic portion can be connected to the task port for receiving tasks.

The periodical check executed by the dynamic portion may solely check for tasks having a high priority. If a task with a high priority is recognised, the dynamic portion checks each lists of tasks for tasks having a low priority (i.e. a priority having a lower priority than the high priority of the new task). If a low priority task is identified in the list of tasks, this low primary task is replaced by the new high priority task. The replaced low priority task is added to the un-assigned tasks to be executed by the workers. In addition, the dynamic portion updates the list of tasks for the worker which includes the new high priority task.

Alternatively or additionally, the dynamic portion checks in the lists of tasks for availability to take on the new high priority task. This check for availability and/or the replacement of a low priority task can include a considering the duration of the new high priority task, the location of the new task, the location of the worker, and/or the like. The dynamic portion may include similar or the same functionalities compared to the task (and training) planning portion. A difference may be that the task (and training) planning portion operates on a different time scale (such as daily) while the dynamic portion operates in real-time or on an hour/minute basis. To achieve the higher through-put, the dynamic portion may not include features of the task (and training) planning portion, especially those that are time-consuming.

The above functioning of the dynamic portion indicates that the dynamic portion can operate independent from the task and training planning portion and the sequencing portion. This highlights the modular nature of the invention.

The invention further refers to a computer program comprising instructions which, when the program is executed by a computer, cause the computer to carry out the steps of the methods describe above.

The invention also refers to a computer-readable storage medium comprising instructions which, when executed by a computer, cause the computer to carry out the steps of the methods described above.

In summary, the invention addresses the following issues:

The complexity of the industrial landscape results in a computational problem which is addressed by carefully designing a multi-model implementation. The final solution is solved by multiple models running at different times, assuring the system and/or method are fast for operational applications, with events updating at real or semi-real time. The models can be run all simultaneously or individually, depending on the user decision needs (tactical or operational). The interactions between the models and the model activation can be handled by the invention. The invention may include a data evaluation function that suggests a default timeframe that runs the problem within a pre-defined acceptable time.

Companies have different strategic goals, and the invention can adapt to each company's needs. The invention is a multi-weighted, multi-objective tool. That is, the system and/or method allow for the selection of multiple objectives, and the assignation of different importance weights to each objective. The invention internally handles the addition or removals of objectives and the consequent change in the interaction between the constraints of the models. Also, in addition to the traditional objectives of cost and time (maintenance time, downtime) minimisation, the invention includes sustainability and human-centric metrics that can be weighted.

In conventional tasks and planning solutions, human factors are often not considered or considered only as inputs, instead of in the optimization objectives by themselves. Nevertheless, nowadays society is keeping core knowledge and management of employee's competence and its growth has become increasingly important as part of the company's sustainability goal.

The present invention calculates task plans by considering required competence and skill levels of workers, as well as relevant parameters associated with the worker, such as availability (work time), traveling needs (and associated emissions). In addition and sometimes more importantly, the invention considers worker skills in its optimization objectives. It is possible for the company to calculate an optimized skill matrix necessary for the ensemble of tasks and demands, as well as providing quantitative advice and the planning to assist the worker's competence growth (learning path and training possibilities) while aligning with the employee's operational tasks.

The invention solves the maintenance planning optimisation problem while considering simultaneously multiple optimisation objectives, some of them configurable, that is, that can be independently activated, deactivated, and partially weighted. That configuration flexibility allows the alignment of the tool with the user's strategy. The invention includes as configurable optimisation objectives the reduction of the emissions in the factory (machinery, maintenance travels, materials, etc.), the increase in maintenance task preference matching, the increase in maintenance training assignation as part of the day-to-day planning, and the optimised allocation of the tasks that could be executed remotely to increase the number of workers working remotely.

This invention includes as distinctive features one or more of the following list:

- Multi-layer models for improving time performance and allowing different time frame execution.
- Data evaluation function for suggesting the time evaluation period.
- Multi-objective and multi-weighted approach for allowing a personalised selection of the strategy.
- Including sustainability metrics for maintenance planning.

- Including human-centric metrics for maintenance planning.
- Combination of the previous characteristics handled internally by the method and/or system, allowing abstraction.

Optional embodiments of the invention will be discussed in conjunction with the accompanying drawings. Therein,

Fig. 1     shows a block diagram of a system for maintaining machinery;
Fig. 2     shows a block diagram of an interface portion of the system of Fig. 1;
Fig. 3     shows another block diagram of the interface portion of Fig. 2 for outlining the selection of objectives;
Fig. 4     shows a block diagram outlining the function of a configuration portion of the system of Fig. 1;
Fig. 5     shows a block diagram outlining the function of a task and training planning portion of the system of Fig. 1;

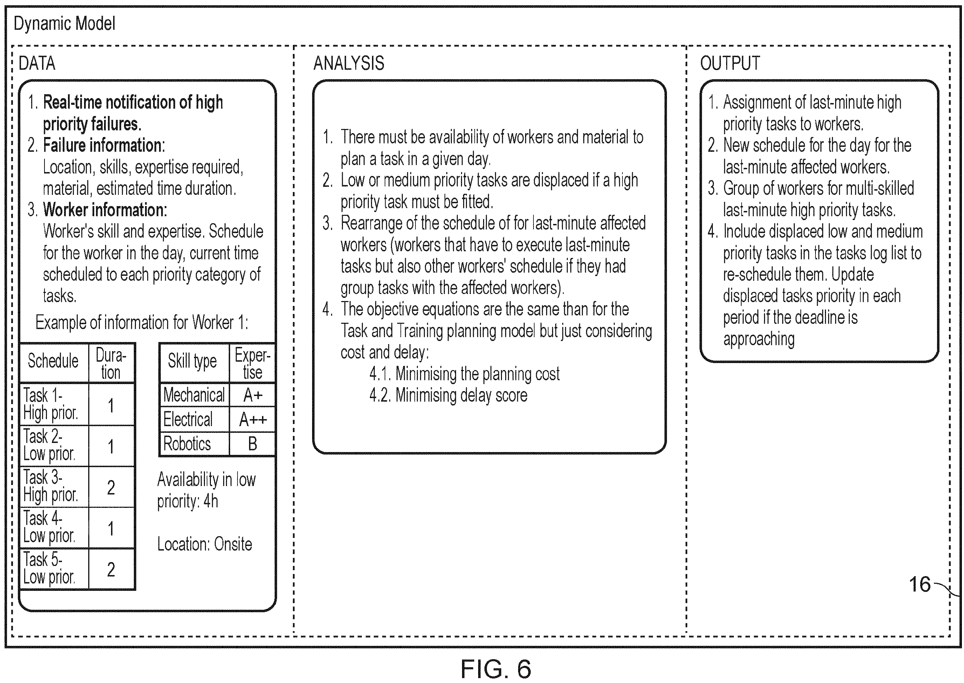

Fig. 6     shows a block diagram outlining the function of a dynamic portion of the system of Fig. 1;
Fig. 7     further shows the working principles of a task portion of the system of Fig. 1;
Fig. 8     shows a block diagram of a data analysis portion of the system of Fig. 1,
Fig. 9     shows the working principles of an accuracy penalty evaluation portion of the data analysis portion of Fig. 8;
Fig. 10    shows on overview of the functional units of the system of Fig. 1; and
Fig. 11    shows a flow diagram illustrating a method for maintaining a machinery.

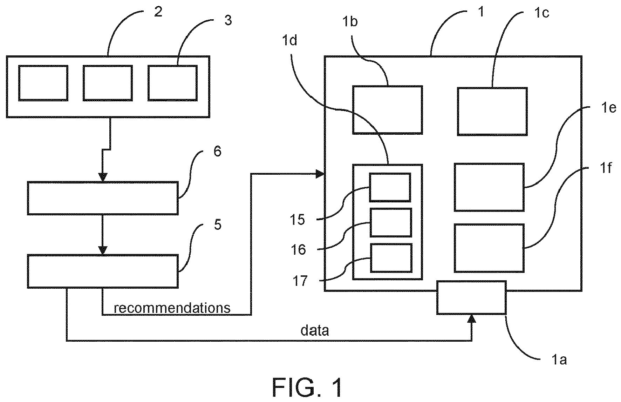

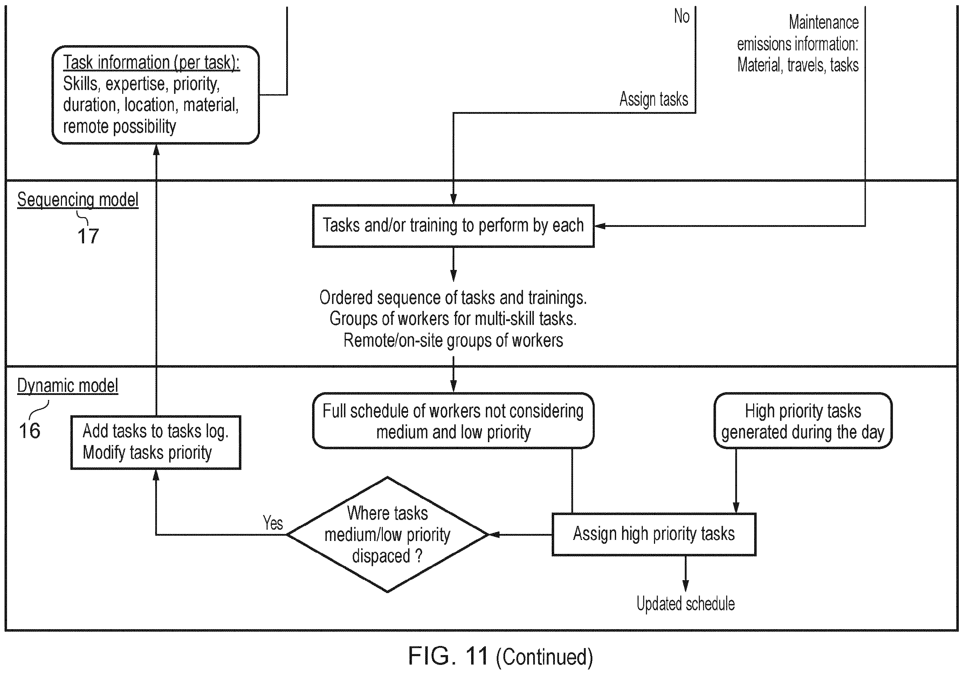

Fig. 1 shows a system 1 for maintaining machinery 2 which includes a plurality of machines 3. The machines 3 may be of the same type or some of the machines 3 may be of a different type. For example, the machinery 2 produces a certain product which requires different types of machines 3 which all contribute to the manufacturing of the product. The machines 3 can be located in the same workshop or in different workshops. It is possible that the respective workshops are located at different sites of a company.

Each machine 3 is connected via a data pipeline 6 to a data analysis portion 5 and/or to the system 1. The data pipeline 6 may include all types of connections which allows the transmission of data from the machines 3 to the data analysis portion 5 and/or the system 1. For example, the machines 3 are provided with various sensors (not shown in the figures) which generate measurement data such as the consumption of electricity, fuel, etc; the operation times; operation speed; and/or other parameters characterising the operation and/or functioning of the machine 3. It is also possible that data is input into the machine 3 such as the number of products processed by the machine 3. The data pipeline 6 may include a LAN or wireless connection. It is also possible that the data pipeline 6 includes an internet connection to transfer data from the machinery 2 to the data analysis portion 5 and/or system 1. This may be the case if the data analysis portion 5 and/or system 1 are remote to the machinery 2, for example if the data analysis portion 5 and/or system 1 are implemented by a cloud computer or a remote server.

Fig. 1 shows that the data analysis portion 5 is external to the system 1. However, the data analysis portion 5 may be part of the system 1. The data analysis portion 5 and/or system 1 may be implemented by a computer having a processor and a memory.

The data analysis portion 5 is configured to forward the data received from the data pipeline 6 to the system 1 and/or to alter (aggregate) the data received from the data pipeline 6 and generate recommendations how to set the system 1. The generation of the recommendations will be described below.

The system 1 includes an input port 1a, a task port 1b, a configuration portion 1c, a task portion ld, an output portion 1e, and an interface portion 1f. The input port 1a and task port 1b may be a functional unit of the computer which is capable of receiving data and forwarding them to a processor of the computer. The input port 1a may thus be regarded as an interface between the processor of the system 1 and the data pipeline 6 or the data analysis portion 5. The task port 1b may be connected to another data line which transmits data indicating tasks to be executed by workers. The task port 1b may also include an interface by which staff and/or workers can input task to be executed by the workers. For example, the task part 1b can include a keyboard or a mouse.

The input port 1a may additionally be configured to receive other types of data which may relate economical and/or environmental information on the machinery such as costs and/or generated by the current machinery, by a new, upgraded and/or replaced machine.

The task port 1b may also allow the input of meta-data to the tasks. Such meta-data may relate to the skills/expertise required to execute the task, the location where the task needs to be executed, the duration of the task, the priority of the task, material needs to execute task, and the like. In addition, the task port 1b may allow the input of information on workers, such as availability, task preferences, training ambitions, skills, expertise, location, and/or the like. These pieces of information may be considered in generating a list of tasks for each worker.

The configuration portion 1c, the task portion ld, the output portion 1e, and/or the interface portion lf may be functional units of an algorithm executed by the processor and stored in the memory of the computer/system 1. The portions, 1c, 1d, 1e, and lf will be described in detail below.

The output portion 1e may include means for indicating/displaying information or other types of data to a worker such as a screen. The output portion 1e may include an interface for transmitting the data generated by the system 1 to other apparatuses such as mobile telephones or other computers. For example, the output portion 1e includes a LAN interface or a wireless transmitter.

The interface portion If can be a graphical interface and may include a displaying device such as a screen and an input device for in putting information such a as a mouse or a keyboard. The interface portion If may also include a touch screen. The interface portion If allows the display of various types of information and options to be selected as well as the input of information and/or the selection of options.

To this end, the interface portion If includes a weight setting portion 12, an objective abstraction portion 121, a model setting portion 18, and/or a model abstraction portion 181. Each of these portions 12, 121, 18, and/or 181 may be a part of a common screen or may be displayed on different screens. In addition, each of these portions 12, 121, 18, and/or 181 may allow selection of one or more options independent from each other. The objective abstraction portion 121 and the model abstraction portion 181 may only be provided for information purposes and do not allow a selection but provide a representation of the functioning of the system 1.

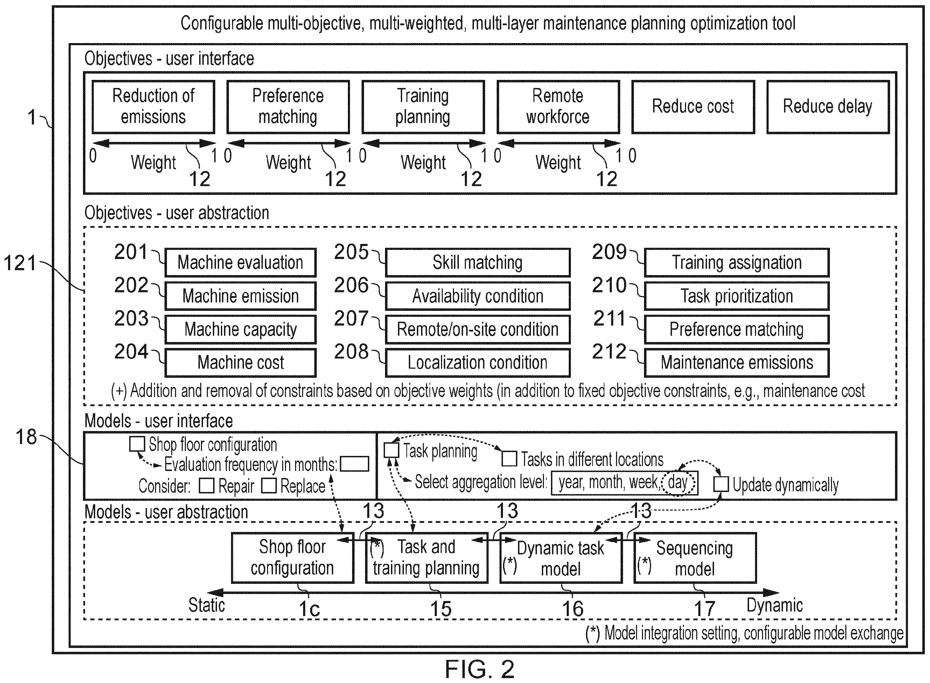

The weight setting portion 12 enables the selection of the weights for setting objectives. The weighting implies the activation and deactivation of certain objectives. The objective abstraction portion 121 allows the selection of objectives that are considered when determining the need for the maintenance of the machinery 2. It is possible that the user selects, in the first step, the objectives from the displayed list of objectives and then uses the weight setting portion 12 to weight, in a second step, the individual objectives. For example, the weighting of 0 implies a deactivation of a certain objective. In this case, the objective abstraction portion 121 may only be provided for information purposes or can be omitted. It is also possible that certain objectives cannot be weighted and have a fixed or predetermined weighting such as the "reduce cost" objective and the "reduce delay" objective depicted in Fig. 2.

Objectives that can be selected may include one or more of the following:

- Machine evaluation (201): One of the activated/deactivated constraints. Set of constraints for deciding on replacing or repairing a machine.
- Machine emissions (202): One of the activated/deactivated constraints. Set of constraints for defining the machine emission model to be used in the machine evaluation.
- Machine capacity (203): One of the activated/deactivated constraints. Set of constraints for defining the machine production capacity to be used in the machine evaluation.
- Machine cost (204): One of the activated/deactivated constraints. Set of constraints for calculating the machine operation and maintenance cost (including cost of missing production opportunities) to be used in the machine evaluation.
- Skill matching (205): One of the activated/deactivated constraints. Set of constraints for assigning workers with the correct set of skills to each maintenance task.
- Availability condition (206): One of the activated/deactivated constraints. Set of constraints for tasks (and training) during the maintenance worker available schedule, considering the production limitations.
- Remote/on-site condition (207): One of the activated/deactivated constraints. Set of constraints for prioritizing remote worker assignation and remote/on-site collaboration to tasks that can be executed remotely.
- Localization condition (208): One of the activated/deactivated constraints. Set of constraints for grouping tasks within locations and arranging the multi-location conditions (travelling from locations, groups of workers for tasks within location; etc.).
- Training assignation (209): One of the activated/deactivated constraints. Set of constraints for assigning training to workers during their available free time (while not performing their maintenance tasks).
- Task prioritization (210): One of the activated/deactivated constraints. Set of constraints for prioritizing the execution of critical tasks.
- Preference matching (211): One of the activated/deactivated constraints.
- (212): One of the activated/deactivated constraints. Set of constraints for modelling the emissions coming from maintenance operations (travelling, delayed of tasks, etc.).

The model setting portion 18 allows the selection of the operation of the configuration portion 1c and the task portion Id, i.e. whether the portions 1c and/or Id activated or not. In addition, the model setting portion 18 allows the determination of strategies that are taken into account by the system 1. For example, one strategy for the configuration portion 1c is whether the maintenance of the machinery 2 includes the repair and/or the replacement of the machinery 2. An example for a strategy that can be selected and considered by the task portion Id is whether tasks in different locations are considered or not. The strategies that can be selected using the model setting portion 18 may be considered a sub-group of objectives that can be selected. In addition, the model setting portion 18 may allow setting the aggregation level and/or on what frequency the configuration portion 1c and/or task portion Id are operated.

The model abstraction portion 181 displays the different models that executed by the system 1. This provides better understanding of the functioning of the system 1 to the user. The model abstraction portion 181 is an optional feature and can be omitted.

The configuration portion 1c may include deterministic and/or probabilistic models and/or artificial intelligence such as neural networks to analyse data that is generated by the machinery 2 (received by the input port 1a) to predict whether or not one or more machines 3 need to be maintained. The maintenance of the machinery 2 may refer to the repair, maintenance, upgrade, replacement, and/or the addition of one or more machines 3.

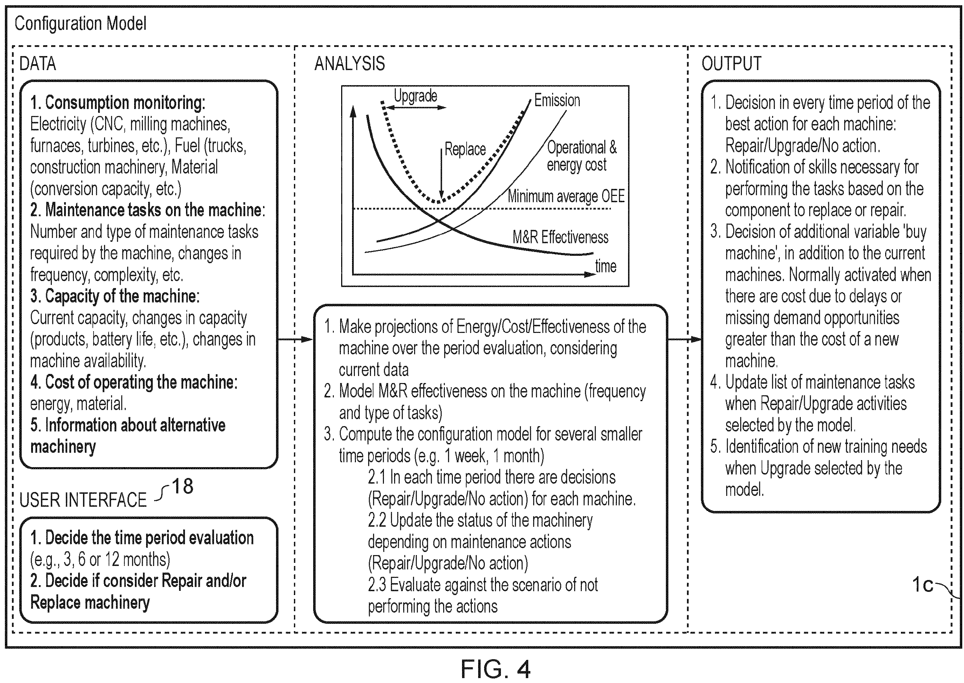

Each of the objectives outlined above may be implemented by a sub-model. The results of the individual sub-models can be combined to achieve a final result by a top-model. The configuration portion 1c may also output a training tasks to the task port 1b, for example if the configuration portion 1c determines that a machine 3 should be replaced and the new machine requires different and/or additional training. Details of the functioning of configuration portion 1c can be gathered from Fig. 4.

An example of a model for the objective "machine emissions 202" is

Emissions for existing machine 2 =

fixed production emissions + variable motor emissions * (10 [=best motor status] - motor status) + variable lubrication emissions * (10 [=best lubrication status] - lubrication status) + emissions material consumption + …

Emissions for potential new machine 2 =

Recycling old machine + manufacturing new machine + new machine production + new machine material emissions + …

An example of a model for the objective "machine costs 204" is

Costs for existing machine 2 =

fixed operation costs + variable operation costs * production + variable operation costs * (10 [=best motor status] - machine status) + material costs * production + maintenance costs + predicted maintenance costs + costs of missed opportunity * not satisfied demand + …

Costs for potential new machine 2 =

Recycling old machine + buying new machine + operating new machine + material new machine + training new machine - increase in demand profit + …

The objectives input via the interface portion If affect the data that is required by the system 1. The system 1 can indicate the data that is required. Some data has default values used in case of no other input provided, in case of missing data that does not have default values, the system 1 (for example using the output portion 1e) indicates which of the objectives (or sub-models) cannot be run due to the missing data. The following table exemplifies the interdependence between the selected objectives and the data that is required for running the sub-models and the top-model.

Relationship between data and user configuration

| Objective | Reduction of emissions | | Preference matching | Training planning | Remote workforce | Always necessary | | |
|---|---|---|---|---|---|---|---|---|
| Models | Shopfloor configuration | Task planning: | Task planning | Task planning | Task planning | Shopfloor configuration | Task planning | Task planning updating dynamically |
| Data | For repair consideration:<br>- Machine consumption data<br><br>- Machine status<br><br>For replace consideration:<br>- Recycle emissions<br><br><br>- Emission information of potential machines (energy consumption, manufacturing emissions) | - On-site worker emissions (initialized with default value).<br><br>Task planning with task in different locations:<br>- Task locations<br>Emissions by kilometer (default valuesfrom GHG protocol)<br>Initial location of workers | - List of worker's preferred tasktype for each worker | - List of worker's preferred trainingtype for each worker. | - Classifytasks by: on-site execution, collaboration on-site/remotel y, fully remotely. | - Machine state<br>- Machine capacity | - Production schedule<br><br>- Workers'daily availability<br>- List of tasks to plan, including: skills required, number of workers, level of expertise, priority, delay penalty cost<br><br><br>Task planning with task in different locations:<br>- Task locations | - Realorsemireal time event information, including: skills required, numberof workers,level of expertise, priority |

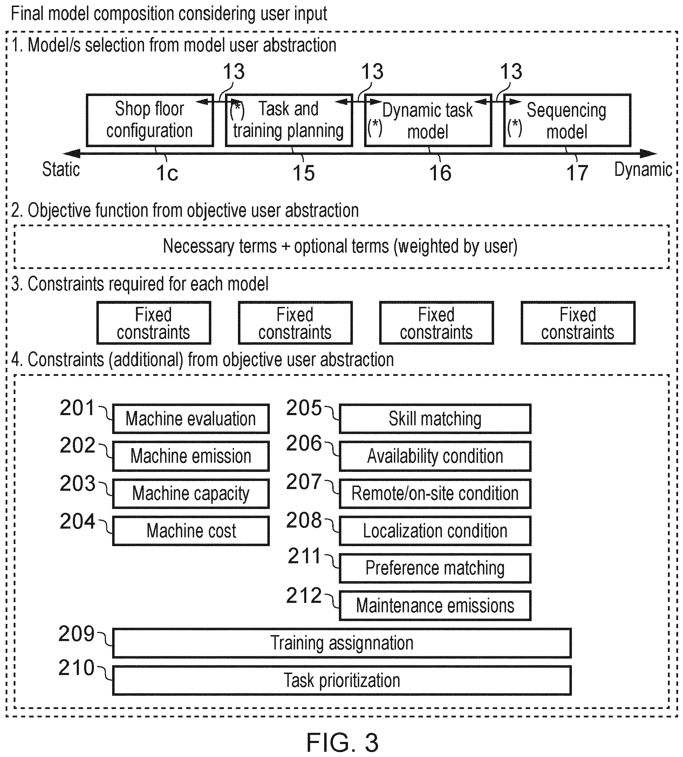

Fig. 3 illustrates how the selection of the configuration portion 1c, the task and planning portion 15, the dynamic portion 16, and/or the sequencing portion 17 results in a display of corresponding objectives, terms, and/or constraints. The final model(s) that the system 1 runs is configured using the information coming from user abstraction layers depicted on the interface portion If. The system 1 takes information/input from the section "Model/s selection" of the interface portion If to select which models/portions 1c, 15, 16, and/or 17 have to be executed, and from the section "Objective function" of the interface portion If to activate terms in the objective function of each model as well as to activate additional constraints in order to accommodate the models to the desired objectives. Each objective will activate one or more objective terms (e.g. the reduction of emissions objective will activate objective terms types 202 and 212), each objective terms requires additional constraints, applicable to one or more models (e.g., objective term type 202 activates additional constraints on the models 1c and 15), but the correct integration of each constraint within the models/portions 1c, 15, 16, and/or 17 that it affects is handled by the system 1 (which can be called user abstraction).

The task portion Id includes a task and training planning portion 15, a dynamic portion 16, and/or a sequencing portion 17 which may operate independent from each other and/or independent from the configuration portion 1c. This means, each portion 1c, 15, 16, and/or 17 may be executed irrespective whether or not one or more of the other portions are running 1c, 15, 16, and/or 17 and/or may operate on different time scales.

The task and training planning portion 15 processes tasks and/or the meta-data, i.e. data which can include information on the material availability, the task to be executed as received by the task port 1b, the relation and location of each of the tasks, skills required for each task, the assigned priority of each task, and/or the workers preferences. The task and training planning portion 15 may include deterministic and/or probabilistic models and/or artificial intelligence such as neural networks to analyse the received data. The task and training planning portion 15 outputs a list of tasks for each worker which may include several lists of tasks for a group of workers if several workers need to work on one task. In addition, the task and training planning portion 15 may change the priority of a task if a deadline is approaching and/or updates the skills of a worker if a training has been completed.

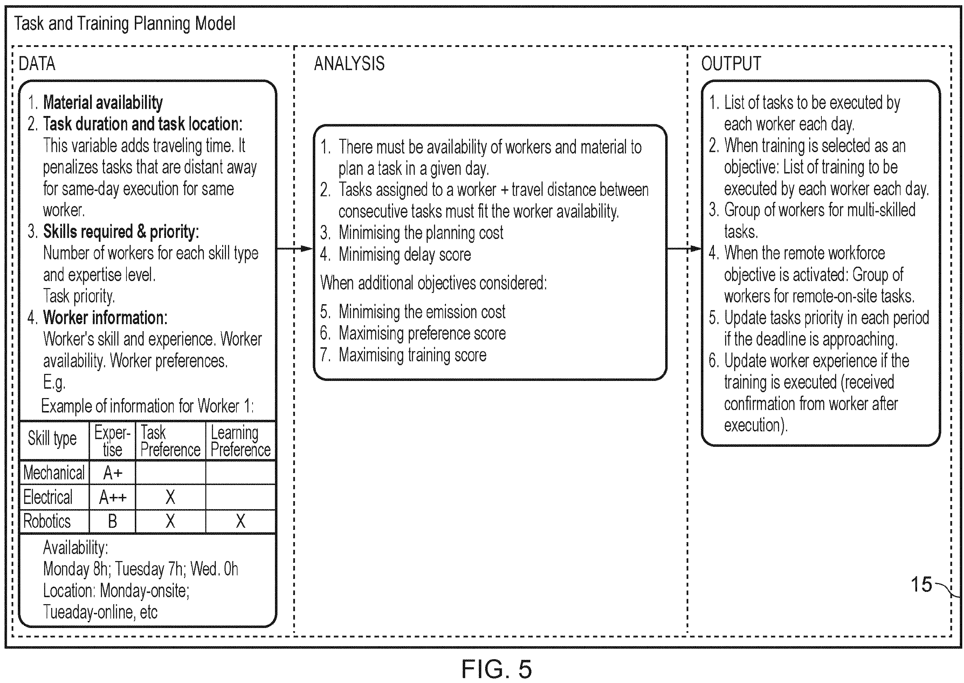

The task and training planning portion 15 considers the pre-determined objective and/or objectives set using the interface portion 1f. Each of the objectives discussed above may be implemented by a sub-model. The results of the individual sub-models can be combined to achieve a final result by a top-model. Details of the task and training planning portion 15 are depicted in Fig. 5.

An example of a model for the objective "minimize planning cost" is

$$\text{Min (Cost)} =$$
$$\text{cost of material} + \text{cost of workers (low, minimum, high expertise)} * \text{number of workers} + \text{cast of delay of production} + \text{total travel cost} + \text{cost of external support} + \dots$$

An example of a model for the objective "minimize emissions" is

$$\text{Min (Emissions)} =$$
$$\text{Total travel emissions} + \text{material emissions} + \text{delayed maintenance emissions} + \dots$$

An example of a model for the objective "minimize delay" is

$$\text{Min (delay)} = \text{time from deadline} * \text{priority}$$

An example of a model for the objective "maximize preference score" is

$$\text{Min (not Preference)} = \sum (\text{task executed by worker} - \text{task preferred by worker})$$

An example of a model for the objective "maximize training score" is

$$\text{Min (not Training)} = \sum (1 - \text{training received by worker})$$

$$\text{Min (not Training Preference)} =$$

$$\sum (\text{training received by worker - training preferred by worker})$$

The dynamic portion 16 is connected to the task port 1b in order to receive tasks especially tasks having a high priority. In addition, the dynamic portion 16 receives meta-data such as relating to the skills, expertise, required material, and/or estimated time duration of the tasks. Further, similar to the task and training planning portion 15, the dynamic portion 16 receives meta-data on the skills and expertise of the workers, the schedule of the worker for today, and/or the current schedule.

The dynamic portion 16 identifies tasks having a low priority (a priority lower than the priority of a new high priority task) in the list of tasks for each worker and checks whether the new high priority task can be taken over by one of the workers in view of meta-data available to the dynamic portion 16 such as the constraints regarding location, expertise and/or estimated time. The dynamic portion 16 may also minimise costs and delays similar to the task and training planning portion 15.

If the dynamic portion 16 determines that a low priority tasks can be replaced by a high priority task, the list of tasks for the respective worker is updated by replacing the low priority task with the new high priority task. Further, the dynamic portion 16 forwards the replaced low priority task to the task and training planning portion 15 for the inclusion of this low priority task in the next preparation of lists of tasks for each worker.

The sequencing portion 17 is connected to the task and training planning portion 15 in order to receive the tasks assigned to each of the workers. The sequencing portion 17 orders the tasks assigned by the task and training planning portion 15 while considering and the availability of all workers assigned to the tasks. The sequencing portion 17 may be considered processing the daily planning.

The system 1 may also include a model interaction portion 13 which may be a functional unit of the computer implementing the system 1. The comments and remarks regarding implementation of the task and training planning portion 15, to dynamic portion 16, and/over the sequencing portion 17 can equally apply to the implementation of the model interaction portion 13.

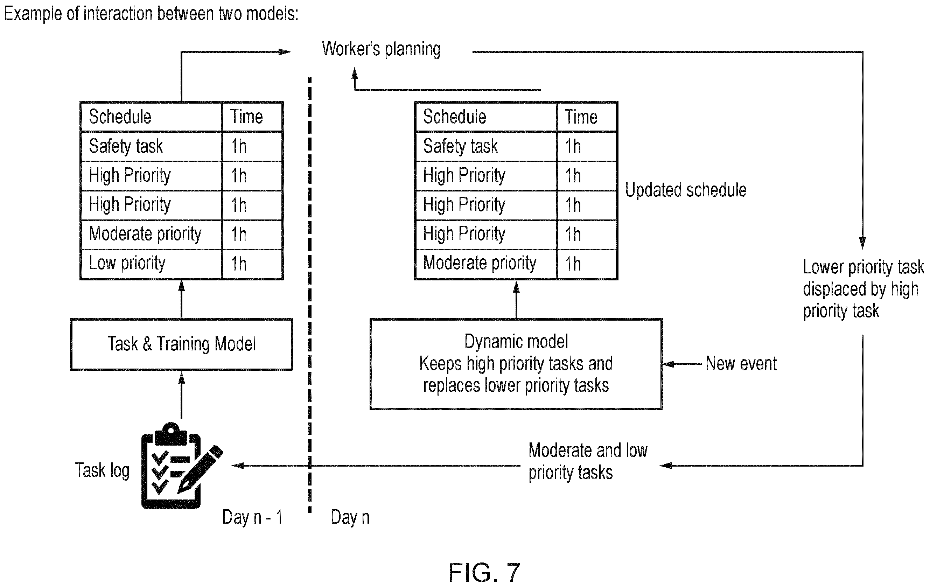

The model interaction portion 13 is configured to control, coordinate, and/or adjust the interaction between the configuration portion 1c, the task and training planning portion 15, the dynamic portion 16, and/or the sequencing portion 17. In particular, the model interaction portion 13 coordinates the interaction of the portions 1c, 15, 16, 17 if one of the portions 1c, 15, 16, 17 is deactivated by the user as described above. Further, the model interaction portion 13 provides the communication between the respective portions 1c, 15, 16, 17. This is illustrated in Fig. 7.

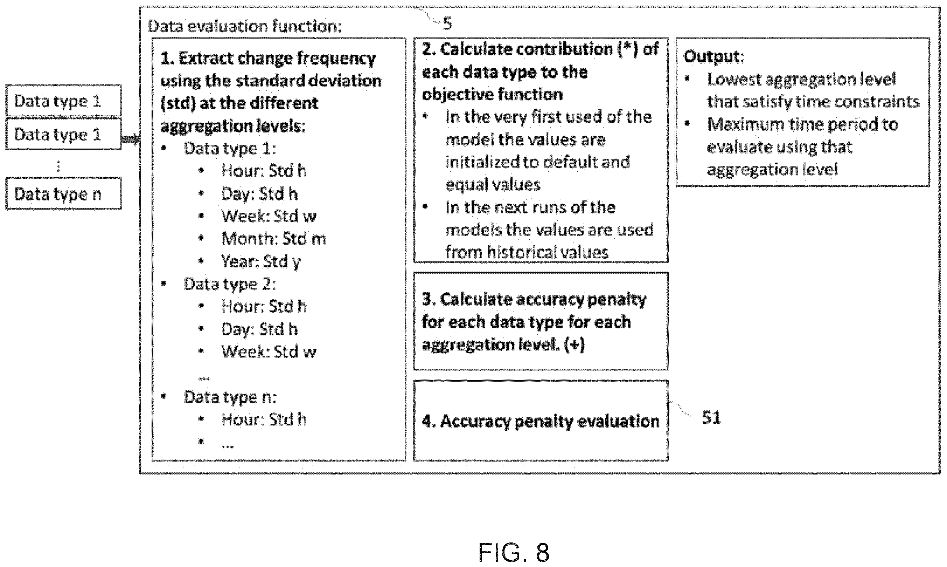

With regard to Fig. 8, the data analysis portion 5 receives different data types from the machinery 2 and calculates the standard deviation for each data type at different aggregation levels. Thus, the data analysis portion 5 aggregates the received data at different levels, i.e. over different time periods such as an hour, a day, a week, a month, and/or a year. The aggregation levels may be pre-set, can be selected by the user, or is determined by the data analysis portion 5.

In a next step, the data analysis portion 5 calculates the contribution of each data type to the final outcome of the system 1. This may be done using the following formula:

$$contribution\ to\ objective_d$$

$$= \sum_{objectives} value\ magnitude_{o,d} \cdot weight\ of\ objective_{o,d}$$

The weight of the objective is either a preselected value or corresponds to the value as chosen by the user (as described above). The value of the magnitude may be a default value or equal values in a first run of the calculation of the contribution of each data type. In subsequent runs, the previous values may be used.

In a next step, the accuracy penalty is calculated for each data type and each aggregation level. This may be done using the following formula:

$$Accuracy\ penalty\ (data\ d, time\ t)$$

$$= std_{d,t} \cdot contribution\ to\ objective_d$$

$$+ \sum_{d != di} corr\ (d, di) \cdot std_{d,t} \cdot contribution\ to\ objective_{di}$$

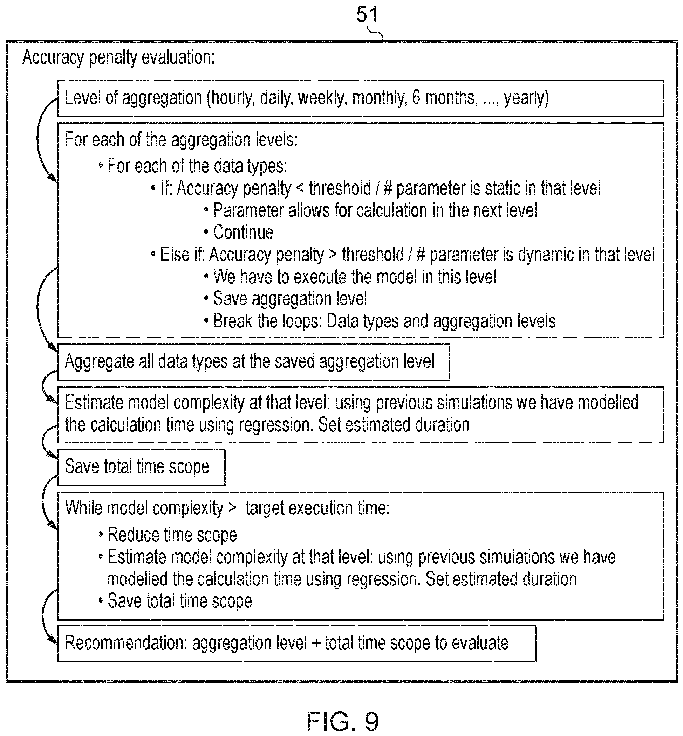

The data analysis portion 5 may include an accuracy penalty evaluation portion 51 which evaluates the calculated accuracy penalties. The functioning of the accuracy penalty evaluation portion 51 is depicted in Fig. 9.

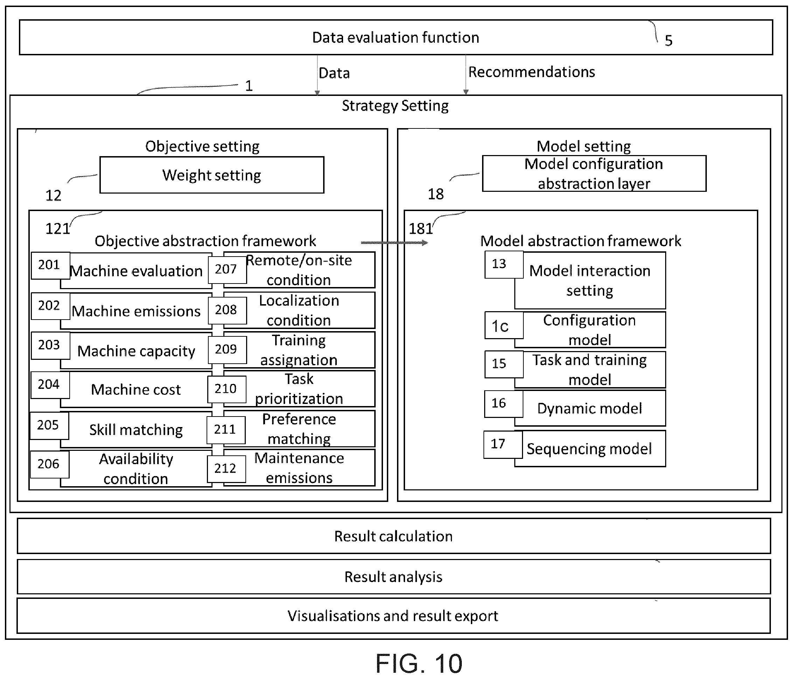

Fig. 10 provides a general overview of the functional units of the system 1 that are involved when analysing the data from the machinery 3. The boxes "result calculation" and "result analysis" correspond to the execution of the configuration portion 1c and the task portion Id. The box "result calculation" refers to the analysis of the data generated by the machinery 3 while the box "result analysis" refers to an optional further processing of the results in order to simplify and illustrate the received results. For example, Key Performance Indicators (KPIs) of the results are calculated. The box "visualisations and result export" refer to the forwarding of the results and the calculated illustrations (KPIs) to the output portion 1e.

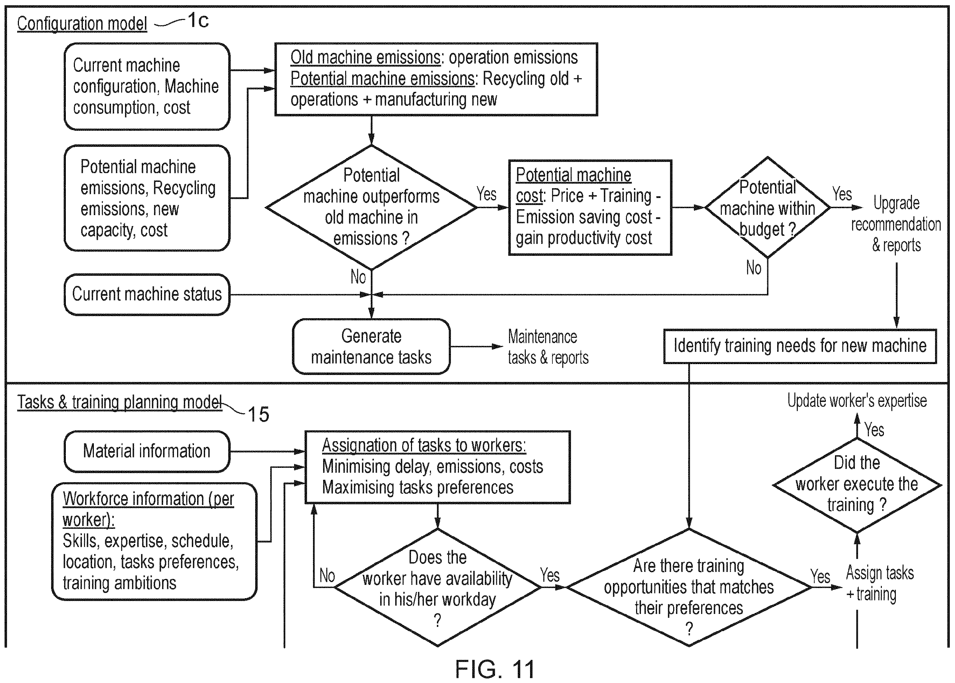

Fig. 11 illustrates a method for maintaining a machinery and generating a list of tasks for a worker. The rectangular blocks refer to calculation/optimisation steps, the rectangular blocks with rounded corners illustrate available data, and the rhombuses correspond to evaluation/decision steps.

The configuration portion 1c determine costs, emissions, consumption, and/or further objectives that are selected using the interface portion If. This determination is made for each of the current machines 3 and for potential replacement machines and/or additional machines. The determined objectives for the current machinery 2 and the machinery 2 having new or replaced machines is compared in order to determine whether or not a machine 2 should be replaced/upgraded or a new machine 3 should be added to the machinery. If the determination indicates a new or replacement machine 2, it is additionally checked whether the cost for the new or the replaced machine is within the budget. If so, the configuration portion 1c issues a recommendation to purchase a new machine or replace/upgrade an existing machine 2. In addition, the configuration portions 1c generate a training task for the new or the replaced/upgraded machine 3.

At the same time, the configuration portion 1c monitors the current status of the machines 3 and determines whether or not the machine 2 needs to be repaired or maintained. If so, the configuration portion 1c generate a maintenance task.

The task and training planning portion 15 uses material information, information on the workforce (such skills, schedule, location, training ambitions and the like), and/or information on the task to be executed (such as skills, expertise, priority, duration, location, and the like) (in short meta-data) in order to assign the task to the workers. This can be done by creating a list of tasks for each worker. The task and training planning portion 15 also checks whether a worker is available for training in view of the list of tasks. If so, training tasks are added to the list of tasks for this worker. In case that a training has been completed by a worker, the stored skills and expertise of the worker are updated in view of the completed training.

The sequencing portion 17 orders the tasks in the list of tasks assigned to each worker. The dynamic portion 16 periodically checks why new tasks having a high priority generated (e.g. a repair task due to malfunction of a machine 3) and/or input into the system 1 using the task port 1b. If one or more workers are assigned to tasks with a lower priority compared to the new high priority task, this new high priority task is added to the ordered list of tasks. This may include the removal of one or more low risk tasks from the ordered list of tasks in case the schedule of the worker is full. If so, to removed low priority task are added to the list of tasks processed by the task and training planning portion 15.

**Claims**

1. Method for maintaining machinery, comprising the steps of:

    a) determining, by a computer, when the machinery will need to be maintained,
    b) acquiring, by a computer, tasks to be executed by workers,
    c) generating, by a computer, a list of tasks for at least one of the workers, the list is generated including a task for maintaining the machinery as determined in step a) and including the tasks acquired in step b),
    d) maintaining the machinery based on the list of tasks for the one of the workers,

    wherein steps a) to c) are executed independently from each other.

2. Method according to claim 1, wherein step a) includes

    a1) selecting objectives on which the determination when the machinery will need to be maintained are based, and/or
    a2) weighting objectives on which the determination when the machinery will need to be maintained are based.

3. Method according to claims 1 or 2, wherein step c) includes

    c1) selecting objectives on which the generation of tasks for the one of the workers are based, and/or
    c2) weighting objectives on which the generation of tasks for the one of the workers are based.

4. Method according to claims 2 or 3, wherein step a) and/or step c) include the execution of a plurality of sub-models and a top-model,

    wherein each sub-model processes a different objective, and
    wherein the top-model combines the results of the plurality of sub-models.

5. Method according to any one of the preceding claims, further comprising selecting a frequency of execution of steps a) and/or c).

6. Method according to any one of the preceding claims, wherein the task includes a training task for the workers, wherein optionally step a) includes generating a training task for the maintained machinery that is included in step b).

7. Method according to any one of the preceding claims, further comprising the step of determining an optimum execution time span for executing steps a) and/or c).

8. Method according to claim 7, wherein the machinery generates a plurality of data types, wherein step a) further includes determining an aggregation level for the plurality of data types and a minimum time frequency for executing step a).

9. Method according to claim 8, wherein the determination of the aggregation level includes

    determining a standard deviation of each data type for different aggregation levels,
    calculating a contribution of each data type for the determination that the machinery will need to be maintained,
    calculating an accuracy penalty for each data type and each aggregation level, and
    comparing the calculated accuracy penalties against a threshold value in order to determine the aggregation level.

10. Method according to claim 9, wherein the determination of the minimum time frequency includes

    estimating a time period for executing step a) at the determined aggregation level based on stored simulations,
    comparing the estimated time period with an inverse of the minimum time frequency, and
    accepting the estimated time period as the inverse of the minimum frequency if the estimated time period is greater than the inverse of the minimum time frequency.

11. Method according to any one of the preceding claims, wherein step b) includes periodically checking for new tasks, wherein optionally a task in the list of tasks for the one of the workers that has a low priority is replaced by a new task having a high priority and the replaced task is included in step b).

12. System for maintaining machinery, comprising

    an input port (1a) for acquiring data from the machinery,
    a task port (1b) configured to receive tasks to be executed by workers,
    a configuration portion (1c) configured to determine when the machinery will need to be maintained,
    a task portion (1d) configured to generate a list of tasks for one of the workers, wherein the list is generated including a task for maintaining the machinery as determined by the configuration portion (1c) and including the tasks acquired by the task port (1b), and
    an output portion (1e) configured to output the task to maintain the machinery to the one of the workers in order to maintain the machinery,
wherein the configuration portion (1c) and the task portion (1d) are configured to operate independently from each other.

13. System according to claim 12, further comprising an interface portion (If) configured to display and/or allow selection of objectives on basis of which the configuration portion (1c) and/or the task portion (1d) work,
wherein optionally the interface portion (If) allows weighting the objectives.

14. System according to claim 13, wherein the interface portion (If) allows selecting a frequency of operation of the configuration portion (1c) and/or the task portion (1d).

15. System according to any one of claims 11 to 14, further comprising a data analysis portion (5) connected to the input port (1a) and configured to determine an aggregation level for the data and a minimum time frequency of operation of the configuration portion (1c).

**Amended claims in accordance with Rule 137(2) EPC.**

1. Method for maintaining machinery, comprising the steps of:

    a) determining, by a computer, when the machinery will need to be maintained,
    b) acquiring, by a computer, tasks to be executed by workers,
    c) generating, by a computer, a list of tasks for at least one of the workers, the list is generated including a task for maintaining the machinery as determined in step a) and including the tasks acquired in step b),
    d) maintaining the machinery based on the list of tasks for the one of the workers,

    **characterized in that** steps a) to c) are executed independently from each other, wherein the method further comprises

    selecting a frequency of execution of steps a) and/or c), and/or
    the step of determining an optimum execution time span for executing steps a) and/or c).

2. Method according to claim 1, wherein step a) includes

    a1) selecting objectives on which the determination when the machinery will need to be maintained are based, and/or
    a2) weighting objectives on which the determination when the machinery will need to be maintained are based

3. Method according to claims 1 or 2, wherein step c) includes

    c1) selecting objectives on which the generation of tasks for the one of the workers are based, and/or
    c2) weighting objectives on which the generation of tasks for the one of the workers are based.

4. Method according to claims 2 or 3, wherein step a) and/or step c) include the execution of a plurality of sub-models and a top-model,

    wherein each sub-model processes a different objective, and
    wherein the top-model combines the results of the plurality of sub-models.

5. Method according to any one of the preceding claims, wherein the task includes a training task for the workers, wherein optionally step a) includes generating a training task for the maintained machinery that is included in step b).

6. Method according to any one of the preceding claims, wherein the machinery generates a plurality of data types, wherein step a) further includes determining an aggregation level for the plurality of data types and a minimum time frequency for executing step a).

7. Method according to claim 6, wherein the determination of the aggregation level includes

determining a standard deviation of each data type for different aggregation levels,
calculating a contribution of each data type for the determination that the machinery will need to be maintained,
calculating an accuracy penalty for each data type and each aggregation level, and
comparing the calculated accuracy penalties against a threshold value in order to determine the aggregation level.

8. Method according to claim 7, wherein the determination of the minimum time frequency includes

estimating a time period for executing step a) at the determined aggregation level based on stored simulations,
comparing the estimated time period with an inverse of the minimum time frequency, and
accepting the estimated time period as the inverse of the minimum frequency if the estimated time period is greater than the inverse of the minimum time frequency.

9. Method according to any one of the preceding claims, wherein step b) includes periodically checking for new tasks, wherein optionally a task in the list of tasks for the one of the workers that has a low priority is replaced by a new task having a high priority and the replaced task is included in step b).

10. System for maintaining machinery, comprising

an input port (1a) for acquiring data from the machinery,
a task port (1b) configured to receive tasks to be executed by workers,
a configuration portion (1c) configured to determine when the machinery will need to be maintained,
a task portion (1d) configured to generate a list of tasks for one of the workers, wherein the list is generated including a task for maintaining the machinery as determined by the configuration portion (1c) and including the tasks acquired by the task port (1b), and
an output portion (1e) configured to output the task to maintain the machinery to the one of the workers in order to maintain the machinery,
**characterized in that** the configuration portion (1c) and the task portion (1d) are configured to operate independently from each other,
wherein the system further comprises
an interface portion (1f) which allows selecting a frequency of operation of the configuration portion (1c) and/or the task portion (1d), and/or
a data analysis portion (5) connected to the input port (1a) and configured to determine an aggregation level for the data and a minimum time frequency of operation of the configuration portion (1c) and/or the task portion (1d).

11. System according to claim 10, further comprising an interface portion (1f) configured to display and/or allow selection of objectives on basis of which the configuration portion (1c) and/or the task portion (1d) work,
wherein optionally the interface portion (1f) allows weighting the objectives.

FIG. 1

FIG. 2

EP 4 167 155 A1

Final model composition considering user input

1. Model/s selection from model user abstraction

13      13      13

| Shop floor configuration | (*) Task and training planning | Dynamic task model (*) | Sequencing model (*) |

Static        1c        15        16        17        Dynamic

2. Objective function from objective user abstraction

Necessary terms + optional terms (weighted by user)

3. Constraints required for each model

| Fixed constraints | Fixed constraints | Fixed constraints | Fixed constraints |

4. Constraints (additional) from objective user abstraction

201 — Machine evaluation       205 — Skill matching

202 — Machine emission        206 — Availability condition

203 — Machine capacity        207 — Remote/on-site condition

204 — Machine cost            208 — Localization condition

                              211 — Preference matching

                              212 — Maintenance emissions

209 — Training assignnation

210 — Task prioritization

FIG. 3

**Configuration Model**

**DATA**

**1. Consumption monitoring:**
Electricity (CNC, milling machines, furnaces, turbines, etc.), Fuel (trucks, construction machinery, Material (conversion capacity, etc.)
**2. Maintenance tasks on the machine:**
Number and type of maintenance tasks required by the machine, changes in frequency, complexity, etc.
**3. Capacity of the machine:**
Current capacity, changes in capacity (products, battery life, etc.), changes in machine availability.
**4. Cost of operating the machine:**
energy, material.
**5. Information about alternative machinery**

**USER INTERFACE** ⌐18

**1. Decide the time period evaluation** (e.g., 3, 6 or 12 months)
**2. Decide if consider Repair and/or Replace machinery**

**ANALYSIS**

1. Make projections of Energy/Cost/Effectiveness of the machine over the period evaluation, considering current data
2. Model M&R effectiveness on the machine (frequency and type of tasks)
3. Compute the configuration model for several smaller time periods (e.g. 1 week, 1 month)
   2.1 In each time period there are decisions (Repair/Upgrade/No action) for each machine.
   2.2 Update the status of the machinery depending on maintenance actions (Repair/Upgrade/No action)
   2.3 Evaluate against the scenario of not performing the actions

**OUTPUT**

1. Decision in every time period of the best action for each machine: Repair/Upgrade/No action.
2. Notification of skills necessary for performing the tasks based on the component to replace or repair.
3. Decision of additional variable 'buy machine', in addition to the current machines. Normally activated when there are cost due to delays or missing demand opportunities greater than the cost of a new machine.
4. Update list of maintenance tasks when Repair/Upgrade activities selected by the model.
5. Identification of new training needs when Upgrade selected by the model.

1c

**FIG. 4**

EP 4 167 155 A1

## Task and Training Planning Model

### DATA

1. **Material availability**
2. **Task duration and task location:**
   This variable adds traveling time. It penalizes tasks that are distant away for same-day execution for same worker.
3. **Skills required & priority:**
   Number of workers for each skill type and expertise level.
   Task priority.
4. **Worker information:**
   Worker's skill and experience. Worker availability. Worker preferences.
   E.g.
   Example of information for Worker 1:

| Skill type | Expertise | Task Preference | Learning Preference |
|---|---|---|---|
| Mechanical | A+ | | |
| Electrical | A++ | X | |
| Robotics | B | X | X |

Availability:
Monday 8h; Tuesday 7h; Wed. 0h
Location: Monday-onsite;
Tueaday-online, etc

### ANALYSIS

1. There must be availability of workers and material to plan a task in a given day.
2. Tasks assigned to a worker + travel distance between consecutive tasks must fit the worker availability.
3. Minimising the planning cost
4. Minimising delay score

When additional objectives considered:

5. Minimising the emission cost
6. Maximising preference score
7. Maximising training score

### OUTPUT

1. List of tasks to be executed by each worker each day.
2. When training is selected as an objective: List of training to be executed by each worker each day.
3. Group of workers for multi-skilled tasks.
4. When the remote workforce objective is activated: Group of workers for remote-on-site tasks.
5. Update tasks priority in each period if the deadline is approaching.
6. Update worker experience if the training is executed (received confirmation from worker after execution).

15

**FIG. 5**

EP 4 167 155 A1

**Dynamic Model**

## DATA

1. **Real-time notification of high priority failures.**
2. **Failure information**:
   Location, skills, expertise required, material, estimated time duration.
3. **Worker information**:
   Worker's skill and expertise. Schedule for the worker in the day, current time scheduled to each priority category of tasks.

Example of information for Worker 1:

| Schedule | Duration |
|---|---|
| Task 1- High prior. | 1 |
| Task 2- Low prior. | 1 |
| Task 3- High prior. | 2 |
| Task 4- Low prior. | 1 |
| Task 5- Low prior. | 2 |

| Skill type | Expertise |
|---|---|
| Mechanical | A+ |
| Electrical | A++ |
| Robotics | B |

Availability in low priority: 4h

Location: Onsite

## ANALYSIS

1. There must be availability of workers and material to plan a task in a given day.
2. Low or medium priority tasks are displaced if a high priority task must be fitted.
3. Rearrange of the schedule of for last-minute affected workers (workers that have to execute last-minute tasks but also other workers' schedule if they had group tasks with the affected workers).
4. The objective equations are the same than for the Task and Training planning model but just considering cost and delay:
   4.1. Minimising the planning cost
   4.2. Minimising delay score

## OUTPUT

1. Assignment of last-minute high priority tasks to workers.
2. New schedule for the day for the last-minute affected workers.
3. Group of workers for multi-skilled last-minute high priority tasks.
4. Include displaced low and medium priority tasks in the tasks log list to re-schedule them. Update displaced tasks priority in each period if the deadline is approaching

16

FIG. 6

EP 4 167 155 A1

Example of interaction between two models:

| Schedule | Time |
|---|---|
| Safety task | 1h |
| High Priority | 1h |
| High Priority | 1h |
| Moderate priority | 1h |
| Low priority | 1h |

Worker's planning

| Schedule | Time |
|---|---|
| Safety task | 1h |
| High Priority | 1h |
| High Priority | 1h |
| High Priority | 1h |
| Moderate priority | 1h |

Updated schedule

Task & Training Model

Dynamic model
Keeps high priority tasks and
replaces lower priority tasks

New event

Lower priority task
displaced by high
priority task

Task log

Moderate and low
priority tasks

Day n - 1    Day n

FIG. 7

EP 4 167 155 A1

**Data evaluation function:** 5

| Data type 1 | |
|---|---|
| Data type 1 | → |
| ⋮ | |
| Data type n | |

**1. Extract change frequency using the standard deviation (std) at the different aggregation levels:**
- Data type 1:
  - Hour: Std h
  - Day: Std h
  - Week: Std w
  - Month: Std m
  - Year: Std y
- Data type 2:
  - Hour: Std h
  - Day: Std h
  - Week: Std w
  - ...
- Data type n:
  - Hour: Std h
  - ...

**2. Calculate contribution (\*) of each data type to the objective function**
- In the very first used of the model the values are initialized to default and equal values
- In the next runs of the models the values are used from historical values

**3. Calculate accuracy penalty for each data type for each aggregation level. (+)**

**4. Accuracy penalty evaluation** 51

**Output:**
- Lowest aggregation level that satisfy time constraints
- Maximum time period to evaluate using that aggregation level

FIG. 8

51

**Accuracy penalty evaluation:**

Level of aggregation (hourly, daily, weekly, monthly, 6 months, ..., yearly)

For each of the aggregation levels:
- For each of the data types:
  - If: Accuracy penalty < threshold / # parameter is static in that level
    - Parameter allows for calculation in the next level
    - Continue
  - Else if: Accuracy penalty > threshold / # parameter is dynamic in that level
    - We have to execute the model in this level
    - Save aggregation level
    - Break the loops: Data types and aggregation levels

Aggregate all data types at the saved aggregation level

Estimate model complexity at that level: using previous simulations we have modelled the calculation time using regression. Set estimated duration

Save total time scope

While model complexity > target execution time:
- Reduce time scope
- Estimate model complexity at that level: using previous simulations we have modelled the calculation time using regression. Set estimated duration
- Save total time scope

Recommendation: aggregation level + total time scope to evaluate

FIG. 9

| Data evaluation function | 5 |

Data　　　　Recommendations

**1** — Strategy Setting

**Objective setting**

Weight setting

**12**

**121** Objective abstraction framework

| 201 | Machine evaluation | 207 | Remote/on-site condition |
| 202 | Machine emissions | 208 | Localization condition |
| 203 | Machine capacity | 209 | Training assignation |
| 204 | Machine cost | 210 | Task prioritization |
| 205 | Skill matching | 211 | Preference matching |
| 206 | Availability condition | 212 | Maintenance emissions |

**Model setting**

Model configuration abstraction layer

**18**

**181** Model abstraction framework

| 13 | Model interaction setting |
| 1c | Configuration model |
| 15 | Task and training model |
| 16 | Dynamic model |
| 17 | Sequencing model |

Result calculation

Result analysis

Visualisations and result export

FIG. 10

FIG. 11

**Configuration model** — 1c

- Current machine configuration, Machine consumption, cost
- Potential machine emissions, Recycling emissions, new capacity, cost
- Current machine status

Old machine emissions: operation emissions
Potential machine emissions: Recycling old + operations + manufacturing new

Potential machine outperforms old machine in emissions ? — Yes → Potential machine cost: Price + Training - Emission saving cost - gain productivity cost → Potential machine within budget ? — Yes → Upgrade recommendation & reports

No (from outperforms) → Generate maintenance tasks → Maintenance tasks & reports

No (from budget)

Identify training needs for new machine

**Tasks & training planning model** — 15

- Material information
- Workforce information (per worker): Skills, expertise, schedule, location, tasks preferences, training ambitions

Assignation of tasks to workers: Minimising delay, emissions, costs Maximising tasks preferences

Does the worker have availability in his/her workday ? — No / Yes → Are there training opportunities that matches their preferences ? — Yes → Assign tasks + training

Did the worker execute the training ? — Yes → Update worker's expertise

EP 4 167 155 A1

Task information (per task):
Skills, expertise, priority,
duration, location, material,
remote possibility

No

Maintenance
emissions information:
Material, travels, tasks

Assign tasks

Sequencing model

17

Tasks and/or training to perform by each

Ordered sequence of tasks and trainings.
Groups of workers for multi-skill tasks.
Remote/on-site groups of workers

Dynamic model

16

Add tasks to tasks log.
Modify tasks priority

Full schedule of workers not considering
medium and low priority

High priority tasks
generated during the day

Yes

Where tasks
medium/low priority
dispaced ?

Assign high priority tasks

Updated schedule

FIG. 11 (Continued)

Europäisches
Patentamt

European
Patent Office

Office européen
des brevets

# EUROPEAN SEARCH REPORT

Application Number

EP 21 20 2683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 533 018 B2 (MIWA HIROBUMI [JP]; TANINAGA TADASHI [JP] ET AL.) 10 September 2013 (2013-09-10) * figures 1-3,7 * * column 5, line 59 - column 10, line 33 * * column 12, lines 21-32 * ----- | 1-15 | INV. G06Q10/06 G06Q10/00 |

TECHNICAL FIELDS
SEARCHED    (IPC)

G06Q

The present search report has been drawn up for all claims

| Place of search | Date of completion of the search | Examiner |
|---|---|---|
| Munich | 17 February 2022 | Gabriel, Christiaan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 2683

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | | Publication date | Patent family member(s) | | Publication date |
|---|---|---|---|---|---|
| US 8533018 | B2 | 10-09-2013 | AU | 2006295772 A1 | 05-04-2007 |
| | | | CA | 2623640 A1 | 05-04-2007 |
| | | | JP | 4717579 B2 | 06-07-2011 |
| | | | JP | 2007100305 A | 19-04-2007 |
| | | | US | 2009259507 A1 | 15-10-2009 |
| | | | WO | 2007037400 A1 | 05-04-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4888692 A
- EP 1947598 A2
- US 2010233663 A1
- JP 2014016691 A